(19) Europäisches Patentamt
European Patent Office
Office européen des brevets

(11) EP 0 503 392 B1

(12) EUROPÄISCHE PATENTSCHRIFT

(45) Veröffentlichungstag und Bekanntmachung des Hinweises auf die Patenterteilung:
**06.08.1997 Patentblatt 1997/32**

(51) Int Cl.$^6$: **C08G 65/20**, C08G 65/04, C08G 65/00

(21) Anmeldenummer: **92103411.2**

(22) Anmeldetag: **28.02.1992**

(54) **Verfahren zur Einstellung des mittleren Molekulargewichts von Polyoxyalkylenglykolen und Polyoxyalkylenderivaten bei der Heteropolysäure-katalysierten Ringöffnungspolymerisation von cyclischen Ethern und/oder Acetalen**

Process for the regulation of the average molecular weight distribution of polyoxyalkyleneglycols and derivatives of polyoxyalkylenes during the ringopening polymerisation of cyclic ethers and/or acetals catalysed by heteropolyacids

Procédé pour régler la distribution du poids moléculaire moyen de polyoxyalkylèneglycols et de dérivés de polyoxyalkylènes au cours de la polymérisation par ouverture de cycle d'éthers cycliques et/ou d'acétals catalysé par des hétéropolyacides

(84) Benannte Vertragsstaaten:
**BE DE ES FR GB IT NL**

(30) Priorität: **13.03.1991 DE 4108047**

(43) Veröffentlichungstag der Anmeldung:
**16.09.1992 Patentblatt 1992/38**

(73) Patentinhaber: **BASF Aktiengesellschaft**
**67063 Ludwigshafen (DE)**

(72) Erfinder:
- **Weyer, Hans-Jürgen, Dr.**
  **W-6800 Mannheim 1 (DE)**
- **Fischer, Rolf, Dr.**
  **W-6900 Heidelberg (DE)**
- **Jeschek, Gerhard, Dr.**
  **W-6718 Grünstadt (DE)**
- **Müller, Herbert, Dr.**
  **W-6710 Frankenthal (DE)**
- **Merger, Franz, Dr.**
  **W-6710 Frankenthal (DE)**

(56) Entgegenhaltungen:
**EP-A- 0 126 471** **EP-A- 0 158 229**

- **PATENT ABSTRACTS OF JAPAN vol. 10, no. 314 (C-380)24. Oktober 1986**
- **R.Bock, Methoden der Analytischen Chemie, Band 2, Teil 2, Verlag Chemie, 1984, Seiten 150-155**
- **G.Henze et al.,Elektrochemische Analytik, Springer Verlag, 1986, Seiten 1-4, 37-39**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 503 392 B1

## Beschreibung

Die vorliegende Erfindung betrifft ein Verfahren zur Einstellung des mittleren Molekulargewichts von Polyoxyalkylenglykolen und Polyoxyalkylenderivaten bei der Heteropolysäure-katalysierten Ringöffnungspolymerisation von cyclischen Ethern und/oder Acetalen in Gegenwart von Protonen-liefernden Verbindungen.

Polyoxyalkylenglykole können nach EP-A 126 471, EP-A 158 229 und US-A 4 658 065 durch die Heteropolysäure-katalysierte Ringöffnungspolymerisation von cyclischen Ethern und/oder Acetalen in Gegenwart geringer Mengen Wasser hergestellt werden, wobei das Wasser als solches dem Reaktionssystem zugesetzt oder mittels kristallwasserhaltiger Heteropolysäuren in dieses eingetragen werden kann.

Des weiteren können Polyoxyalkylenglykolderivate, wie Polyoxyalkylenglykol-Monoether von einwertigen Alkohlen oder Polyoxyalkylenglykol-Monoester von Monocarbonsäuren durch die Heteropolysäure-katalysierte Ringöffnungspolymerisation cyclischer Ether und/oder Acetale in Gegenwart der betreffenden einwertigen Alkohole bzw. Monocarbonsäuren synthetisiert werden. Besonders vorteilhaft lassen sich diese Polyoxyalkylenglykol-Derivate in Abwesenheit von Wasser, also mit wasserfreien Reaktanten und Heteropolysäure-Katalysatoren erzeugen.

Bei den oben angeführten Umsetzungen wird, wie in Reaktionsgleichung (1) stellvertretend für die Ringöffnungspolymerisation von Tetrahydrofuran (THF) zu Polyoxybutylenglykol (Poly-THF) oder Poly-THF-Derivaten dargestellt ist, formal 1 Mol der Protonen-liefernden Verbindung R~H endständig an die sich aus n Monomereinheiten aufbauende Polyoxyalkylenkette addiert, wodurch letztendlich die Kettenreaktion der Ringöffnungspolymerisation abgebrochen wird und das Endprodukt der Umsetzung entsteht.

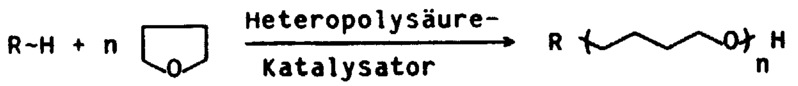

(1)

THF

Als Protonen-liefernde Verbindungen R~H oder auch als Protonendonatoren werden hier und im folgenden der Einfachheit halber solche Verbindungen R~H bezeichnet, welche unter der Einwirkung des Heteropolysäure-Katalysators formal in der Weise an die sich bildende Polyoxyalkylenkette addiert werden, daß sich an deren einem Ende das Proton der Verbindung R~H - daher der Name - und an deren anderem Ende die Gruppe R der Verbindung R~H befindet. Wie diese Addition tatsächlich stattfindet und welche Vorgänge dabei am Heteropolysäure-Katalysator ablaufen, ist weitgehend unbekannt. Der Rest R der Protonen-liefernden Verbindung R~H kann dabei beispielsweise für eine Hydroxygruppe, eine beliebige, aliphatische, aromatische oder araliphatische Alkoholat-Gruppe oder eine beliebige aliphatische, aromatische oder araliphatische Acyl-Gruppe stehen.

Der Gehalt an Protonendonator R~H beeinflußt das Phasenverhalten der Reaktionsmischung, wobei unter Reaktionsmischung oder Reaktionssystem hierbei und im folgenden das zur Umsetzung gelangende Gemisch aus Monomer, Protonen-liefernder Verbindung R~H, Heteropolysäure-Katalysator und ggf. einem unter den Reaktionsbedingungen inerten Lösungsmittel verstanden wird. Im Zuge der Umsetzung kommt selbstverständlich als weitere Komponente das bei der Polymerisationsreaktion entstehende Polymer zur Reaktionsmischung hinzu. Bei hohen Gehalten an den Verbindungen R~H bildet die Reaktionsmischung eine homogene Phase, wodurch später bei der Aufarbeitung die Abtrennung des Katalysators erschwert werden kann. Des weiteren können sehr hohe Konzentrationen an Protonendonator R~H ein unerwünschtes Nachlassen der Polymerisationsaktivität des Heteropolysäure-Katalysators zur Folge haben. Bei sehr niedrigen Protonendonator-Gehalten der Reaktionsmischungen wird die Heteropolysäure nicht mehr vollständig gelöst. Deshalb werden die obengenannten Umsetzungen zweckmäßigerweise mit solchen Gehalten an Protonendonator R~H durchgeführt, die zur Ausbildung eines flüssigen 2-Phasensystems in der Reaktionsmischung führen, wobei die schwerere, untere Phase den größten Teil des Heteropolysäure-Katalysators und beträchtliche Mengen des Protonendonators R~H neben monomerem Ausgangsmaterial und frisch gebildetem Polymer enthält, wohingegen die leichtere Oberphase neben Restmengen an Protonendonator und Spuren an Katalysator im wesentlichen aus dem monomeren Ausgangsmaterial und darin gelöstem Polymer zusammengesetzt ist.

Da formal die vollständige Addition der Protonen-liefernden Verbindung R~H an die sich bildende Polyoxyalkylenkette den Kettenabbruch der Polymerisationsreaktion bewirkt, hat das Konzentrationsverhältnis von Heteropolysäure-Katalysator und Protonendonator in der Reaktionsmischung einen wesentlichen Einfluß auf das mittlere Molekulargewicht des entstehenden Polymeren. So gilt in der Regel, daß je höher der Gehalt an der Verbindung R~H in der Reaktionsmischung ist, desto niedriger das mittlere Molekulargewicht des entstehenden Polymerisates ausfällt. Dementsprechend nimmt das mittlere Molekulargewicht des erzeugten Polymeren bei abnehmender Konzentration des Protonendonators R~H zu. Unter mittlerem Molekulargewicht oder mittlerer Molmasse wird hier und falls nicht anders angezeigt auch im folgenden, das Zahlenmittel $M_n$ des Molekulargewichts verstanden, wie es beispielsweise bei der Bestimmung des Molekulargewichts mit Hilfe der Verfahren der Gelpermeationschromatographie, Viskosimetrie

oder Osmometrie erhalten wird.

Eine wirtschaftlich besonders interessante Klasse der Polyoxyalkylenglykole und der genannten Polyoxyalkylenglykol-Derivate sind solche Polyether, deren mittleres Molekulargewicht im Bereich von etwa 500 bis 3500 Dalton liegt. Solche Polyether können im oben beschriebenen 2-Phasensystem hergestellt werden. Für viele Verwendungszwecke der Polyoxyalkylenglykole und Polyoxyalkylenglykol-Derivate werden aber möglichst einheitliche Verbindungen mit definierten Eigenschaften, also Polyether und Polyether-Derivate bestimmter mittlerer Molmassen und mit einer möglichst engen Molekulargewichtsverteilung gewünscht, um deren spezifische Eigenschaften ausnutzen zu können oder um aus verschiedenen Polymeren bestimmter Molmassen Mischungen definierter Zusammensetzung mit für den jeweiligen Verwendungszweck maßgeschneiderten Eigenschaften herstellen zu können.

Es war bislang allerdings nicht möglich, Polyoxyalkylenglykole und Polyoxyalkylenglykol-Derivate bestimmter mittlerer Molmassen gezielt durch die Heteropolysäure-katalysierte Ringöffnungspolymerisation von cyclischen Ethern und/oder Acetalen herzustellen. Da des weiteren kein Verfahren zur Verfügung stand, mit dessen Hilfe sich die Konzentrationsverhältnisse der Reaktanten in der Reaktionsmischung und insbesondere des Protonendonators R~H in der Katalysatorphase, über den zeitlichen Verlauf der Umsetzung betrachtet, kontinuierlich messen und steuern ließen, war es bislang ebenfalls nicht möglich, derartige Polyoxyalkylenglykole und Polyoxyalkylenglykol-Derivate mit einer möglichst engen Molekulargewichtsverteilung zu erzeugen.

Der vorliegenden Erfindung lag daher die Aufgabe zugrunde, ein zuverlässiges, reproduzierbares, einfaches und robustes Verfahren zu finden, das es ermöglicht, den Gehalt an Protonendonator R~H im Reaktionssystem und insbesondere in der Katalysatorphase zu regulieren und das auf diese Weise die gezielte Einstellung des mittleren Molekulargewichts bei der Herstellung von Polyoxyalkylenglykolen und von den genannten Polyoxyalkylenglykol-Derivaten bei der Heteropolysäure-katalysierten Ringöffnungspolymerisation von cyclischen Ethern und/oder Acetalen erlaubt. Das Verfahren sollte in der Lage sein, den Gehalt an Protonendonator R~H hinreichend schnell und genau zu messen und zu steuern, um auch bei der kontinuierlichen Herstellung der betreffenden Polyetherverbindungen die gezielte Einstellung eines bestimmten mittleren Molekulargewichtes gleichzeitig mit einer engen Molekulargewichtsverteilung des entstehenden Polymeren zu erzielen. Des weiteren sollte dieses Verfahren universell einsetzbar sein, d.h es sollte in der Lage sein, die Einstellung des gewünschten mittleren Molekulargewichts in den hinsichtlich der Art der jeweils verwendeten Monomeren und ggf. Comonomeren, Heteropolysäurekatalysatoren und Protonendonatoren R~H unterschiedlichen Reaktionssystemen gezielt zu steuern.

Dementsprechend wurde ein Verfahren zur Einstellung des mittleren Molekulargewichts von Polyoxyalkylenglykolen und Polyoxyalkylenglykol-Derivaten bei der Heteropolysäure-katalysierten Ringöffnungspolymerisation von cyclischen Ethern und/oder Acetalen in Gegenwart von Protonen-liefernden Verbindungen gefunden, das dadurch gekennzeichnet ist, daß man die im Reaktionssystem befindliche Menge an der betreffenden Protonen-liefernden Verbindung im Laufe der Umsetzung über die Messung der elektrischen Leitfähigkeit reguliert.

Es wurde also gefunden, daß das Verhältnis von Protonendonator R~H zu Heteropolysäure-Katalysator im Reaktionssystem und insbesondere in der Katalysatorphase einen meßbaren Einfluß auf die elektrische Leitfähigkeit des Reaktionssystems bzw. der Katalysatorphase ausübt, wodurch es möglich wird, das Protonendonator-Heteropolysäure-Verhältnis im Reaktionssystem als Ganzem und in der Katalysatorphase im besonderen kontinuierlich zu messen und zu steuern. Es wurde weiterhin gefunden, daß die elektrische Leitfähigkeit der Katalysatorphase mit dem mittleren Molekulargewicht des entstehenden Polymeren korreliert werden kann und somit die Möglichkeit besteht, durch die Einstellung und die Einhaltung eines bestimmten Wertes für die elektrische Leitfähigkeit im Reaktionssystem bzw. in der Katalysatorphase über den zeitlichen Verlauf der Polymerisationsreaktion das mittlere Molekulargewicht des entstehenden Polymeren gezielt und unter Einhaltung einer engen Molekulargewichtsverteilung festzulegen. Infolgedessen kann der Wert für die elektrische Leitfähigkeit im Reaktionssystem und insbesondere in der Katalysatorphase über die Zugabe frischen Protonendonators R~H gesteuert werden oder umgekehrt, kann der Zusatz frischen Protonendonators zur Reaktionsmischung sowie der Gehalt der Reaktionsmischung und insbesondere der Katalysatorphase an Protonendonator R~H und somit auch das mittlere Molekulargewicht des entstehenden Polymeren über die Messung der elektrischen Leitfähigkeit der Reaktionsmischung und insbesondere der Katalysatorphase reguliert werden.

Die Messung der elektrischen Leitfähigkeit kann beispielsweise mit Hilfe der Techniken, Schaltungen und Meßanordnungen, wie sie von T. und L. Shedlovsky in A. Weissberger, B. W. Rossiter (Ed.) Techniques of Chemistry, Band I, Seite 163-204, Wiley-Interscience, New York, 1971, beschrieben sind, im erfindungsgemäßen Verfahren durchgeführt werden. Als Leitfähigkeitsmeßgeräte und Leitfähigkeitsmeßzellen können auch die im Handel erhältlichen Geräte und Elektroden zur Leitfähigkeitsmessung erfolgreich im erfindungsgemäßen Verfahren eingesetzt werden. Als Meßelektroden können die üblichen Platin-Elektroden benutzt werden. Im Dauerbetrieb kann es vorkommen, daß die Elektroden sich im Laufe der Zeit mit Polymer oder Nebenprodukten der Polymerisationsreaktion belegen und dadurch die Meßwerte verfälscht werden. Es ist daher zweckdienlich die Funktion der Elektroden ab und zu zu überprüfen und die Elektroden erforderlichenfalls zu reinigen.

Die Leitfähigkeit kann in der homogenen Reaktionsmischung gemessen werden. Bei der Durchführung der Polymerisationsreaktion im 2-Phasensystem, bestehend aus im wesentlichen monomer- und produkt-haltiger Oberphase

und Katalysatorphase, wird die elektrische Leitfähigkeit vorzugsweise in der flüssigen Katalysatorphase gemessen.

Die Konzentration des betreffenden Protonendonators R~H in der Kataly-satorphase läßt sich einfach mit Hilfe des erhaltenen Leitfähigkeitsmeßwertes anhand einer vorher unter definierten Bedingungen aufgestellten Eichkurve feststellen. In der Regel ist es zweckmäßig, für die unterschiedlichen Protonendonator-Heteropolysäure-Systeme individuelle Eichkurven unter Berücksichtigung der bei der Polymerisationsreaktion anzuwendenden Reaktionstemperatur zu erstellen. über den Vergleich von Istwert und Sollwert der gemessenen elektrischen Leitfähigkeit kann dann die Dosierung des Protonendonators R~H zur Reaktionsmischung gesteuert werden. Diese Steuerung der Dosiervorrichtung kann auf an sich bekannte Weise, mit Hilfe bekannter, beispielsweise elektronischer Steuergeräte automatisiert werden, wodurch man es in der Hand hat, die Zugabe des Protonendonators R~H zur Reaktionsmischung kontinuierlich zu steuern.

Bei der Erstellung der Eichkurven sollte beachtet werden, daß die Leitfähigkeit der Katalysatorphase in der Regel mit zunehmendem Gehalt an Protonendonator R~H solange ansteigt, bis sich die Katalysatorphase im Reaktionsgemisch homogen löst. Bei der Ausbildung eines einphasigen, homogenen Reaktionssystems sinkt der Wert der elektrischen Leitfähigkeit im Vergleich zur in der Katalysatorphase gemessenen elektrischen Leitfähigkeit im allgemeinen deutlich ab.

Außer mit dem Gehalt des Protonendonators R~H in der Katalysatorphase läßt sich der Wert der elektrischen Leitfähigkeit in der Katalysatorphase auch mit dem mittleren Molekulargewicht des entstehenden Polymeren korrelieren. Dabei ergibt sich unter Berücksichtigung der jeweils verwendeten Heteropolysäure, des verwendeten Protonendonators, des verwendeten Monomeren und der angewandten Polymerisationstemperatur eine praktisch lineare Beziehung zwischen der gemessenen elektrischen Leitfähigkeit und dem mittleren Molekulargewicht des gebildeten Polymeren. Eine solche Beziehung ist beispielhaft, für das Reaktionssystem Dodecawolframatophosphorsäure/Tetrahydrofuran/Wasser bei einer Polymerisationstemperatur von 60°C in Fig. I dargestellt.

Das Vorangegangene zusammenfassend, wird erfindungsgemäß das mittlere Molekulargewicht der herzustellenden Polyalkylenglykole bzw. Polyalkylenglykolderivate bei der Heteropolysäure-katalysierten Ringöffnungspolymerisation von cyclischen Ethern und/oder Acetalen in Gegenwart von Protonenliefernden Verbindungen derart eingestellt, daß man für das jeweils angewandte Polymerisationssystem, bestehend im wesentlichen aus cyclischem Ether und/ oder Acetal, Protonen-liefernder Verbindung und Heteropolysäure bei der jeweils angewandten Polymerisationstemperatur die Korrelationen zwischen der gemessenen Leitfähigkeit im Polymerisationssystem, vorzugsweise in dessen Katalysatorphase, und dem mittleren Molekulargewicht des entstehenden Polymeren sowie dem Gehalt der Polymerisationsmischung an Protonen-liefernder Verbindung, beispielsweise durch Erstellen einer Eichkurve, einer mathematischen Gleichung oder eines Algorithmus, ermittelt und die so ermittelte, zur Erzielung eines Polymeren bestimmten mittleren Molekulargewichts erforderliche Leitfähigkeit im angewandten Polymerisationssystem während des zeitlichen Verlaufs der Polymerisationsreaktion weitgehend konstant hält, indem man der Polymerisationsmischung laufend die zur Konstanthaltung der Leitfähigkeit erforderliche Menge an Protonenliefernder Verbindung zudosiert, so daß der Gehalt an Protonen-liefernder Verbindung über den zeitlichen Verlauf der Polymerisationsreaktion hinweg ebenfalls weitgehend konstant gehalten wird. Kurzum bedeutet dies, daß man die im Reaktionssystem befindliche Menge an der betreffenden Protonen-liefernden Verbindung während des zeitlichen Verlaufs der Umsetzung über die Messung der elektrischen Leitfähigkeit reguliert.

Das erfindungsgemäße Verfahren ist praktisch allgemein zur Einstellung des mittleren Molekulargewichts der entstehenden Polymeren bei der Herstellung von Polyoxyalkylenglykolen und Polyoxyalkylenglykol-Derivaten durch die Heteropolysäure-katalysierte Ringöffnungspolymerisation cyclischer Ether und/oder Acetale geeignet.

Zur Herstellung der genannten Polymere können beispielsweise die folgenden Monomeren eingesetzt werden: Ethylenoxid, Propylenoxid und andere substituierte Epoxide, wie Epichlorhydrin, 1,2-Butylenoxid, 2,3-Butylenoxid, Isobutylenoxid, Oxetan und Oxetanderivate, wie 3,3-Dimethyloxetan, 3,3-Bis-chlormethyloxetan, 5-gliedrige cyclische Ether und Acetale, wie Tetrahydrofuran, Methyltetrahydrofurane, 1,3-Dioxolan, 6-gliedrige cyclische Ether, wie Tetrahydropyran, 1,4-Dioxan, 1,3-Dioxan, Trioxan, 7- und höhergliedrige, cyclische Ether, wie Oxepan, Kronenether und cyclische Oligomere des Tetrahydrofurans. Diese Monomere können zu Homopolymeren umgesetzt werden, es ist aber auch möglich, Mischungen dieser Monomere zu copolymerisieren.

Bei der Herstellung copolymerer Polyoxyalkylenglykole können zusätzlich Comonomere aus der Gruppe der Diole, Triole und Polyole in die Polyoxyalkylenkette einpolymerisiert werden. Beispielhaft seien hierfür die folgenden Alkohole genannt: Ethylenglykol, Propylenglykol, 1,4-Butandiol, Neopentylglykol, 1,6-Hexandiol, Glycerin, Xylit, Sorbit, Mannit. In der Regel werden diese Comonomeren statistisch verteilt in die Polymerkette eingebaut. Es versteht sich von selbst, daß diese hier unter ihrer Funktion als Comonomere aufgeführten, mehrwertigen Alkohole gleichzeitig als Protonendonatoren R~H fungieren.

Bei der Copolymerisation dieser mehrwertigen Alkohole mit den übrigen Monomeren wird aus den mehrwertigen Alkoholen zwangsläufig Wasser abgespalten, welches ebenfalls als Protonendonator R~H fungiert. Aufgrund dieser komplizierten Verhältnisse im Reaktionssystem wirkt sich das erfindungsgemäße Verfahren bei der gezielten Herstellung von Copolymeren aus cyclischen Ethern und mehrwertigen Alkoholen mit einer bestimmten mittleren Molmasse

und einer engen Molekulargewichtsverteilung günstig aus.

Als Protonen-liefernde Verbindungen R~H können Wasser, einwertige Alkohole und Monocarbonsäuren verwendet werden. Wird Wasser als Protonen-liefernde Verbindung eingesetzt, entstehen als Produkt der Polymerisationsreaktion Polyoxyalkylenglykole, bei Verwendung von einwertigen Alkoholen bilden sich Polyoxyalkylenglykol-Monoether und beim Zusatz von Monocarbonsäuren, die betreffenden Monocarbonsäureester der Polyoxyalkylenglykole.

Zur Herstellung von Polyoxyalkylenglykolen wird die Protonen-liefernde Verbindung Wasser, in Abhängigkeit vom gewünschten mittleren Molekulargewicht des Polyetherglykols, in der Regel in Mengen von 0,1 bis 15, vorzugsweise 1 bis 8 mol/mol Heteropolysäure eingesetzt. Diese Werte gelten auch, wenn mehrwertige Alkohole als Comonomere zur Herstellung der Polyoxyalkylenglykole mitverwendet werden.

Zur Herstellung von Polyoxyalkylenglykol-Monoethern können prinzipiell alle Arten von einwertigen Alkoholen eingesetzt werden, z.B. aliphatische, cycloaliphatische, aromatische oder araliphatische Alkohole. Vorzugsweise werden jedoch $C_1$- bis $C_{18}$-Alkohole und Benzylalkohol benutzt, besonders bevorzugt werden aliphatische $C_1$- bis $C_8$-Alkohole verwendet. Beispielsweise können die folgenden einwertigen Alkohole im erfindungsgemäßen Verfahren eingesetzt werden: Methanol, Ethanol, n-Butanol, tert.-Butanol, Octanol-1, Octadecanol-1, Cyclohexanol, Crotylalkohol, Benzylalkohol, Phenol. Die einwertigen Alkohole werden im allgemeinen in Mengen von 0,1 bis 15, vorzugsweise 1 bis 8 mol/mol Heteropolysäure zur Reaktionsmischung gegeben.

Zur Herstellung von Polyoxyalkylenglykol-Monoestern von Monocarbonsäuren können aliphatische, cycloaliphatische, aromatische und araliphatische Carbonsäuren verwendet werden. Vorzugsweise werden aliphatische $C_1$- bis $C_{18}$-Monocarbonsäuren sowie Benzoesäure, insbesondere $C_1$- bis $C_4$-Monocarbonsäuren, wie Ameisensäure, Essigsäure, Propionsäure, Buttersäure, Acrylsäure oder Methacrylsäure eingesetzt. Zweckmäßigerweise arbeitet man mit Carbonsäuregehalten der Reaktionsmischung von 0,1 bis 15 mol, vorzugsweise 1 bis 8 mol Monocarbonsäure/mol Heteropolysäure.

Enthält die Reaktionsmischung die obengenannten Mengen am jeweiligen Protonendonator R~H, bildet sich in der Regel das bereits erwähnte System aus zwei flüssigen Phasen aus, in dem sich Polyoxyalkylenglykole und die betreffenden Polyoxyalkylenglykol-Derivate der mittleren Molmassen von ca. 500 bis ca. 3500 besonders vorteilhaft herstellen lassen.

Als Heteropolysäuren im Sinne der vorliegenden Erfindung werden anorganische Polysäuren mit mindestens zwei verschiedenen Zentralatomen verstanden, welche aus schwachen, mehrbasischen Sauerstoffsäuren eines Metalls, vorzugsweise aus den Sauerstoffsäuren des Chroms, Molybdäns, Vanadiums oder Wolframs und/oder den entsprechenden Oxiden dieser Metalle $CrO_3$, $MoO_3$, $V_2O_5$ bzw. $WO_3$ und denen eines anderen Metalls oder Nichtmetalls, beispielsweise Arsen, Bor, Jod, Phosphor, Selen, Silicium, Germanium oder Tellur, als gemischte, partielle Anhydride entstehen. In der Regel hat das Atomverhältnis zwischen den erstgenannten und den letztgenannten Elementen in diesen Heteropolysäuren den Wert 2,5 bis 12, vorzugsweise ist der Wert dieses Atomverhältnisses 9 oder 12.

Als Heteropolysäuren, welche im erfindungsgemäßen Verfahren Einsatz finden können, seien die folgenden Verbindungen beispielhaft genannt: Dodecamolybdatophosphorsäure ($H_3PMo_{12}O_{40} \cdot nH_2O$), Dodecamolybdatokieselsäure ($H_4SiMo_{12}O_{40} \cdot nH_2O$), Dodecamolybdatocer (IV)säure ($H_8CeMo_{12}O_{42} \cdot nH_2O$), Dodecamolybdatoarsen(V)säure $H_3AsMo_{12}O_{40} \cdot nH_2O$), Hexamolybdatochrom(III)säure ($H_3CrMo_6O_{24}H_6 \cdot nH_2O$), Hexamolybdatonickel(II)säure ($H_4NiMo_6O_{24}H_6 \cdot 5H_2O$), Hexamolybdatojodsäure ($H_5JMo_6O_{24} \cdot nH_2O$), Octadecamolybdatodiphosphorsäure ($H_6P_2Mo_{18}O_{62} \cdot 11\ H_2O$), Octadecamolybdatodiarsen(V)säure ($H_6As_2Mo_{18}O_{62} \cdot 25\ H_2O$), Nonamolybdatomangan(IV) säure ($H_6MnMo_9O_{32} \cdot nH_2O$), Undecamolybdatovanadatophosphorsäure ($H_4PMo_{11}VO_4^{\ominus}{}_0 \cdot nH_2O$), Decamolybdatodivanadatophosphorsäure ($H_5Mo_{10}V_2O_{40} \cdot nH_2O$), Dodecavanadatophosphorsäure ($H_7PV_{12}O_{36} \cdot nH_2O$), Dodecawolframatokieselsäure ($H_4SiW_{12}O_{40} \cdot 7\ H_2O$), Dodecawolframatophosphorsäure ($H_3PW_{12}O_{40} \cdot nH_2O$), Dodecawolframatoborsäure ($H_5BW_{12}O_{40} \cdot nH_2O$), wolframatodiphosphorsäure ($H_6P_2W_{18}O_{62} \cdot 14H_2O$), Octadecawolframatodiarsen(V) säure ($H_6As_2W_{18}O_{62} \cdot 14\ H_2O$), Hexamolybdatohexawolframatophosphorsäure ($H_3PMo_6W_6O_{40} \cdot nH_2O$). Selbstverständlich können auch Mischungen von Heteropolysäuren eingesetzt werden. Vorzugsweise werden im erfindungsgemäßen Verfahren aufgrund ihrer einfachen Zugänglichkeit Dodecawolframatophosphorsäure, Dodecamolybdatophosphorsäure, Nonamolybdatophosphorsäure, Dodecamolybdatokieselsäure und Dodecawolframatokieselsäure eingesetzt.

Die Heteropolysäuren und deren Salze sind bekannte Verbindungen und können nach bekannten Verfahren, beispielsweise nach den Methoden von Brauer (Herausgeber): Handbuch der Präparativen, Anorganischen Chemie, Band III, S. 1774-1798, Enke, Stuttgart 1981 oder nach den Verfahren von Top. Curr. Chem. 76, 1 (1978), hergestellt werden.

Die so hergestellten Heteropolysäuren liegen im allgemeinen in hydratisierter Form vor und werden vor ihrer Verwendung als Katalysator im Verfahren zur Herstellung von Polyoxyalkylenglykolen in dem Maße vom darin enthaltenen, koordinativ gebundenen Wasser befreit, daß sich das für die betreffende Umsetzung erwünschte Konzentrationsverhältnis zwischen der Protonen-liefernden Verbindung Wasser und dem Heteropolysäure-Katalysator einstellt. Zum Einsatz als Katalysatoren zur Herstellung von Polyoxyalkylenglykol-Monoethern oder Polyoxyalkylen-Monoestern werden die Heteropolysäuren vorzugsweise vollständig dehydratisiert. Diese Dehydratisierung kann vorteilhaft thermisch, beispielsweise nach dem Verfahren von Makromol. Chem. 190, 929 (1989) durchgeführt werden. Eine andere Möglichkeit zur Dehydratisierung der Heteropolysäuren besteht je nach verwendeter Heteropolysäure darin, daß man die Heteropolysäure in einem organischen Lösungsmittel, beispielsweise in einen Dialkylether oder Alkohol, löst, das Wasser mit dem organischen Lösungsmittel aus seiner koordinativen Bindung mit der Heteropolysäure verdrängt und azeotrop mit dem Lösungsmittel abdestilliert.

Die Herstellung der Polyoxyalkylenglykole und der genannten Polyoxyalkylenglykol-Derivate kann sowohl kontinuierlich als auch diskontinuierlich ausgeführt werden. Zweckmäßigerweise wird dazu die Heteropolysäure in Mengen von 10 bis 300 Gew-Teilen, vorzugsweise 50 bis 150 Gew.-Teilen, bezogen auf 100 Gew.-Teile des verwendeten Monomeren, eingesetzt. Es ist auch möglich, größere Mengen an Heteropolysäure zum Reaktionsgemisch zu geben.

Die Heteropolysäure kann in fester Form der Umsetzung zugeführt werden, worauf sie durch das In-Kontaktbringen mit den weiteren Reaktanten nach und nach unter Ausbildung der flüssigen Katalysatorphase solvatisiert wird. Es kann aber auch so verfahren werden, daß man die feste Heteropolysäure mit dem zu verwendenden Protonendonator und/oder dem zu verwendenden Monomer anmaischt und die dabei erhaltene Katalysatorlösung als flüssige Katalysatorphase in den Reaktor leitet. Dabei kann sowohl die Katalysatorphase als auch das monomere Ausgangsmaterial im Reaktor vorgelegt werden. Es können aber auch beide Komponenten gleichzeitig in den Reaktor eingeleitet werden.

Die Polymerisation wird üblicherweise bei Temperaturen von 0 bis 150°C, vorzugsweise bei 30 bis 80°C vorgenommen. Vorteilhaft wird dabei unter Atmosphärendruck gearbeitet, die Umsetzung unter Druck vornehmlich unter dem Eigendruck des Reaktionssystems kann sich aber gleichfalls als zweckmäßig und vorteilhaft erweisen, insbesondere wenn leichtflüchtige Monomere verwendet werden.

Da die Polymerisation bevorzugt in einem 2-Phasensystem durchgeführt wird, muß für eine gute Durchmischung der beiden Phasen gesorgt werden. Dazu ist es erforderlich, daß die Reaktoren sowohl bei der chargenweisen als auch bei der kontinuierlichen Verfahrensweise mit leistungsfähigen Mischeinrichtungen, beispielsweise Rührwerken, ausgestattet sind. Beim diskontinuierlichen Verfahren wird dazu in der Regel ein Rührkessel verwendet, wobei die beiden flüssigen Phasen nach beendeter Umsetzung auf herkömmliche Weise voneinander getrennt werden.

Bevorzugt wird jedoch die kontinuierliche Verfahrensweise angewandt. Dabei kann die Umsetzung in herkömmlichen, für kontinuierliche Verfahren geeigneten Reaktoren oder Reaktoranordnungen, beispielsweise in Rohrreaktoren, welche mit Innenausbauten ausgestattet sind, die eine gute Durchmischung des 2-Phasensystems gewährleisten oder aber auch in Rührkesselkaskaden ausgeführt werden, wobei sich an die Umsetzung noch die kontinuierliche Abscheidung der Katalysatorphase von der Monomer- und Produkt-haltigen Oberphase anschliept. Vorteilhaft wird im erfindungsgemäßen Verfahren eine Apparatur eingesetzt, wie sie in Fig. II schematisch dargestellt ist.

Bei dieser Apparatur handelt es sich um einen mit einem Phasenabscheider 2 kombinierten Rührkessel 1, von ansonsten an und für sich herkömmlicher Bauart, der entweder mit Außen- oder Innenheizung ausgerüstet sein kann und mit in der Regel separaten Einlaßstutzen 5 für die Zuleitung der einzelnen Reaktanten und die Begasung mit Inertgas versehen ist. In Fig. II wurde der Übersichtlichkeit wegen auf die Darstellung der Kesselheizung verzichtet und nur ein Einlaßstutzen 5, stellvertretend für alle weiteren, eingezeichnet. Des weiteren sind an den Reaktor eine Vorrichtung zum Druckausgleich 6 und ein Ablaßstutzen 7 angebaut. Alle diese Vorrichtungen sind mit separaten Steuervorrichtungen 8, 9 und 10, beispielsweise Schiebern oder Ventilen, versehen, welche das Öffnen und Schließen dieser Stutzen sowie die Regelung des Zulaufs ermöglichen. Der Reaktor ist mit einem Rührwerk 12 versehen, welches durch die mit der Buchse 13 abgedichtete Führung 11 nach außen verbunden ist. Mit dem Phasenabscheider 2 steht der Rührkessel 1 über die etwa in Höhe des oberen bzw. unteren Drittels angebrachten Zuführungen 3 bzw. 4 in Verbindung. Die bei der Umsetzung erhaltene Produktlösung wird über den Auslaßstutzen 18, welcher zweckmäßigerweise oberhalb der Zuführung 3 angebracht ist, aus der Apparatur abgezogen. Der Abfluß der Produktlösung wird über die Steuervorrichtung 19, die z.B. ein Schieber oder ein Ventil sein kann, geregelt.

Zum Betrieb dieser kontinuierlichen Apparatur werden die Reaktanten im Reaktor vorgelegt und bei der gewünschten Reaktionstemperatur mit dem Rührwerk 12 intensiv durchmischt, wobei eine emulsionsartige Mischung aus Katalysatorphase und Oberphase entsteht. Die durch das Rührwerk im Reaktionsgemisch erzeugte Strömung hat zur Folge, daß die emulsionsartige Mischung über die Zuführung 3 in den Phasenabscheider 2 gelangt, worin sich die Katalysatorphase und die monomer- und produkthaltige Oberphase aufgrund ihrer unterschiedlichen Dichten entmischen. Dabei scheiden sich etwa oberhalb der gestrichelten Linie 16 und unterhalb der gestrichelten Linie 17 aus der trüben, emulsionsartigen Reaktionsmischung die klare, farblose, produkthaltige Oberphase bzw. die je nach verwendeter Heteropolysäure gefärbte, klare Katalysatorphase ab. Die Produktphase wird über den Auslaß 18 abgezogen, dieweil die Katalysatorphase über die Zuführung 4 infolge des vom Rührwerk 12 erzeugten Sogs wieder in den Rührkessel zurückfließt und dort erneut mit der monomer- und produkthaltigen Oberphase verwirbelt wird. Die Linien 14 und 15 bezeichnen den ungefähren Flüssigkeitsmeniskus bzw. -pegel im Rührkessel bzw. Phasenabscheider im Betrieb. Über die Einfüllstutzen 5 wird frisches Monomer und frischer Protonendonator R~H in den Rührkessel eingetragen. Dabei wird die Zufuhr des Protonendonators mit Hilfe der in die flüssige Katalysatorphase eintauchenden Leitfähigkeitsmeßzelle 20 so gesteuert, daß der gewünschte Protonendonatorgehalt in der Katalysatorphase im Rahmen der Regelgenauigkeit konstant bleibt.

Frisches Monomer wird üblicherweise über eine Füllstandsregelung gesteuert in den Reaktor eindosiert. Zweckmäßigerweise wird frisches Monomer in dem Maße zugeführt, wie Produkt und nicht umgesetztes Monomer aus der Reaktionsapparatur ausgetragen werden. Im allgemeinen wird die Polymerisation in Abhängigkeit von der Katalysatormenge und der Reaktionstemperatur beim diskontinuierlichen Verfahren während eines Zeitraumes von 0,5 bis 50 h, vorzugsweise von 1 bis 10 h und besonders bevorzugt von 1 bis 8 h durchgeführt. Beim kontinuierlichen Verfahren werden in der Regel Verweilzeiten von 0,5 bis 20, vorzugsweise von 1 bis 8 und besonders bevorzugt von 2 bis 5 h eingestellt. Zu Beginn der kontinuierlichen Umsetzung benötigt das beschriebene Reaktionssystem eine gewisse Zeit bis sich ein stationäres Gleichgewicht eingestellt hat und während der es vorteilhaft sein kann, den Auslaß 18 mit Hilfe der Steuervorrichtung 19 geschlossen zu halten, also keine Produktlösung aus der Reaktionsapparatur auszutragen.

Die Katalysatorphase verbleibt in der Reaktionsapparatur und wird entsprechend den Katalysatorverlusten, die durch den Austrag geringer Katalysatormengen mit der Produkt-haltigen Oberphase entstehen, laufend durch Zufuhr frischen und/oder ggf. durch die Rückführung des ausgetragenen Katalysators ergänzt.

Zweckmäßigerweise wird beim Vorliegen eines Systems aus zwei flüssigen Phasen die Messung der elektrischen Leitfähigkeit in der Katalysatorphase vorgenommen.

Da beim Arbeiten im beschriebenen 2-Phasensystem infolge der intensiven Durchmischung der beiden Phasen, die Reaktionsmischung eine Art Emulsion bildet, wird zur Erzielung reproduzierbarer Meßwerte die Leitfähigkeitsmeßzelle zweckmäßigerweise in solchen beruhigten Zonen des Reaktors installiert, in denen sich die Katalysatorphase von der Monomer-und Produkthaltigen Oberphase abgeschieden hat. Eine Möglichkeit zur Anordnung der Leitfähigkeitsmeßzelle ist beispielhaft in Figur II für die kontinuierliche Verfahrensweise dargestellt. Beim diskontinuierlichen Verfahren kann die Meßung der elektrischen Leitfähigkeit punktweise erfolgen, in dem man in bestimmten Zeitintervallen die Rührung abstellt und die Leitfähigkeit nach Absetzen der schwereren Katalysatorphase mißt. Vorteilhaft kann im diskontinuierlichen Verfahren eine Apparatur angewandt werden, welche in ihrem Aufbau, dem der in Figur II dargestellten Apparatur weitgehend entspricht, in der aber der Phasenabscheider 2 durch ein im Vergleich dazu kleiner dimensioniertes Meßrohr ersetzt worden ist, durch das die Reaktionsmischung zirkulieren kann, wobei es, wie in Figur II dargestellt, zur Trennung der beiden flüssigen Phasen kommt. Bei Anwendung einer solchen Apparatur kann die Leitfähigkeit auch in diskontinuierlichen Verfahren zur Herstellung von Polyoxyalkylenglykolen und Polyoxyalkylenglykolderivaten kontinuierlich gemessen werden.

Die Herstellung der beschriebenen Polyetherderivate wird vorteilhaft unter einer Inertgasatmosphäre durchgeführt, wobei beliebige Inertgase, wie Stickstoff oder Argon, verwendet werden können. Die cyclischen Ether werden vor ihrer Verwendung zweckmäßigerweise von gegebenenfalls darin enthaltenen Peroxiden befreit. Zur Herstellung der Polyoxyalkylenglykol-Monoether und Polyoxyalkylenglykol-Monoester werden vorzugsweise wasserfreie Monomere und Protonendonatoren eingesetzt.

Der Zusatz von unter den Reaktionsbedingungen inerten, organischen Lösungsmitteln, beispielsweise aliphatischen und aromatischen Kohlenwasserstoffen sowie halogenierten Kohlenwasserstoffen ist möglich und kann sich dahingehend vorteilhaft auswirken, daß die Phasentrennung von Katalysator- und Oberphase erleichtert wird. In der Regel dient das Monomere sowohl als Reaktant als auch Lösungsmittel.

Die Aufarbeitung der Polymerisat-haltigen oberen Phase kann z.B. auf die Weise erfolgen, daß man darin enthaltene Heteropolysäure-Spuren durch Zusatz einer Base, beispielsweise Alkalimetall- oder Erdalkalimetall-Hydroxidlösungen, Ammoniak, Alkalimetall- oder Erdalkalimetall-Carbonatlösungen oder Hydrogencarbonat-Lösungen neutralisiert, das darin enthaltene Monomer abdestilliert und die im Destillationsrückstand verbliebene Polyetherverbindung zur Abtrennung ausgefallener Salze filtriert. Das bei der Destillation zurückgewonnene Monomer kann selbstverständlich wieder in die Umsetzung zurückgeführt werden.

Das erfindungsgemäße Verfahren ermöglicht es erstmals, Polyoxyalkylenglykole, Polyoxyalkylenglykol-Monoether und Polyoxyalkylenglykol-Monoester bestimmter mittlerer Molekulargewichte gezielt und mit einer engen Molekulargewichtsverteilung über die Heteropolysäure-katalysierte Ringöffnungspolymerisation von cyclischen Ethern und/oder Acetalen in Gegenwart der entsprechenden Protonendonatoren R~H herzustellen.

Polyoxyalkylenglykole werden vielseitig angewandt, beispielhaft sei hier nur deren Verwendung in Hydraulikölen oder als Diolkomponente bei der Herstellung von Polyurethanen genannt. Polyoxyalkylenglykol-Monoether, insbesondere Poly-THF-Monoether, finden beispielsweise zur Herstellung spezieller Polyurethane Verwendung (JP-A-105 029/1988) und werden außerdem für spezielle Schmieröle (EP-A-336 171), als Zusatz für Motorenöle (JP-A-159 411/1979) sowie als Spinnöle (JP-A-211 371/1988) benutzt. Polyoxyalkylenglykol-Monoester von Monocarbonsäuren werden beispielsweise als Weichmacher (US-A-4 482 411), Imprägniermittel (DE-A-29 32 216), Monomere (EP-A-286 454), Emulgatoren und Dispergierhilfsmittel (JP-A-138 452/1987) sowie zum Deinken bei der Wiederaufbereitung von Altpapier (JP-A-303 190/1988) eingesetzt.

Beispiele

Die mittleren Molmasse ($M_n$) der gemäß den Beispielen hergestellten Polymeren wurde mittels Gelpermeationschromatographie bestimmt, wobei ein standardisiertes Polystyrol zur Eichung verwendet wurde. Aus den erhaltenen Chromatogrammen wurde das Zahlenmittel $M_n$ nach der Gleichung

$$M_n = \frac{\Sigma\, c_i}{\Sigma\, \frac{c_i}{M_i}}$$

berechnet, in der $c_i$ für die Konzentration der einzelnen Polymerspezies i im erhaltenen Polymergemisch steht und in der $M_i$ das Molekulargewicht der einzelnen Polymerspezies i bedeutet. Die Molekulargewichtsverteilung, im folgenden als Dispersität D bezeichnet, wurde aus dem Verhältnis von Gewichtsmittel des Molekulargewichts ($M_w$) und Zahlenmittel des Molekulargewichts ($M_n$) nach der Gleichung

$$\frac{M_w}{M_n} = D$$

berechnet.

Das Gewichtsmittel $M_w$ wurde aus den erhaltenen Chromatogrammen mit Hilfe der Formel

$$M_w = \frac{\Sigma\, c_i M_i}{\Sigma\, c_i}$$

bestimmt. Die zur Bestimmung der Dispersität herangezogenen Proben waren nicht wie allgemein üblich einer vorherigen Kurzweg-Destillation zur Entfernung flüchtiger, kurzkettiger Polymerer unterzogen worden, weshalb ein höherer Wert für D ermittelt wurde, als er nach einer vorausgegangenen Kurzweg-Destillation zu erwarten gewesen wäre.

Beispiel 1

1000 g THF, 38 g Wasser und 500 g Dodecawolframatophosphorsäure wurden in einer Apparatur gemäß Figur II 4 Stunden in einer Argonatmosphäre und unter starkem Rühren auf 60°C erhitzt. In der Beruhigungszone, wo sich die flüssige Katalysatorphase von der organischen Phase trennte, wurde die elektrische Leitfähigkeit der Katalysatorphase gemessen. Anschließend wurde weitere 100 Stunden lang stündlich 250 g THF und soviel Wasser zudosiert, daß die Leitfähigkeit 8,3 mS/cm betrug. Währenddessen wurde die gleiche Menge an organischer Phase der Apparatur entnommen. Anschließend wurden die leichtflüchtigen Bestandteile der organischen Phase, wie THF und Wasser, in einer Vakuumdestillation abdestilliert. Der THF-Umsatz betrug 8 %. Das entstandene Poly-THF hatte ein mit Hilfe der Methode der Hydroxygruppenbestimmung (Deutsches Arzneimittelbuch; 7. Auflage, Kapitel V 3.4.3.) bestimmtes Molekulargewicht von 1000. Der Wert für seine Dispersität D betrug 1,8.

Beispiel 2

Beispiel 2 wurde wie Beispiel 1 durchgeführt. Nur wurden zu Beginn 19 g Wasser zugesetzt und die Leitfähigkeit während des Versuches bei 6,0 mS/cm gehalten. Der THF-Umsatz betrug 20 %. Das entstandene Poly-THF hatte ein mit Hilfe der Methode der Hydroxygruppenbestimmung ermitteltes Molekulargewicht von 1800. Seine Dispersität D hatte den Wert 1,9.

Beispiel 3

Dieser Versuch wurde wie in Beispiel 1 durchgeführt. Nur wurden zu Beginn 14 g Wasser zugesetzt und die elektrische Leitfähigkeit während des Versuches bei 3,6 mS/cm gehalten. Der THF-Umsatz betrug 28 %. Das entstandene Poly-THF hatte ein mit Hilfe der Methode der Hydroxygruppenbestimmung ermitteltes Molekulargewicht von 2400. Seine Dispersität D hatte den Wert 1,6.

Beispiel 4

1000 g THF, 38 g wasserfreies Methanol und 500 g wasserfreie Dodecawolframatophosphorsäure wurden in einer Apparatur gemäß Figur II 4 Stunden in einer Argonatmosphäre unter starkem Rühren auf 60°C erhitzt, wobei in der

Beruhigungszone, wo sich die flüssige Katalysatorphase von der organischen Phase trennte, die elektrische Leitfähigkeit der Katalysatorphase gemessen wurde. Anschließend wurde während weiterer 100 Stunden stündlich 250 g THF und soviel Methanol zudosiert, daß die Leitfähigkeit 5,9 mS/cm betrug. Währenddessen wurde die gleiche Menge an organischer Phase der Apparatur entnommen. Anschließend wurden die leichtflüchtigen Bestandteile der organischen Phase, wie THF und Methanol, im Zuge einer Vakuumdestillation entfernt. Der THF-Umsatz betrug 18 %. Der entstandene Poly-THF-Monomethylether hatte ein mittleres Molekulargewicht ($M_n$) von 2150. Seine Dispersität D hatte den Wert 1,7.

Beispiel 5

Dieser Versuch wurde wie Beispiel 4 durchgeführt. Nur wurden zu Beginn 55 g tert.-Butanol zugesetzt und die Leitfähigkeit während des Versuches durch Zugabe von weiterem tert.-Butanol bei 4,3 mS/cm gehalten. Der THF-Umsatz betrug 13 %. Der entstandene Poly-THF-Mono-tert.-Butylether hatte ein mittleres Molekulargewicht ($M_n$) von 1900. Seine Dispersität D hatte den Wert 1,7.

Beispiel 6

1000 g THF, 50 g Ameisensäure und 500 g wasserfreie Dodecawolframatophosphorsäure wurden in einer Apparatur gemäß Figur II 4 Stunden in einer Argonatmosphäre und unter starkem Rühren auf 60°C erhitzt, wobei in der Beruhigungszone, wo sich die flüssige Katalysatorphase von der organischen Phase schied, die elektrische Leitfähigkeit der Katalysatorphase gemessen wurde. Anschließend wurde weitere 100 Stunden lang stündlich 250 g Tetrahydrofuran und soviel Ameisensäure zudosiert, daß die Leitfähigkeit 5,7 mS/cm betrug. Währenddessen wurde die gleiche Menge an organischer Phase der Reaktionsapparatur entnommen. Anschließend wurden die leichtflüchtigen Bestandteile der organischen Phase, wie THF und Ameisensäure, im Zuge einer Vakuumdestillation entfernt. Der THF-Umsatz betrug 17 %. Das entstandene Poly-THF-Monoformiat hatte ein mittleres Molekulargewicht ($M_n$) von 1700. Seine Dispersität D hatte den Wert 1,8.

Beispiel 7

Dieser Versuch wurde wie Beispiel 6 durchgeführt. Nur wurden zu Beginn 90 g Eisessig zugesetzt und die elektrische Leitfähigkeit der Katalysatorphase während des Versuches durch Zugabe von weiterer Essigsäure bei 5,0 mS/cm gehalten. Der THF-Umsatz betrug 22 %. Das entstandene Poly-THF-Monoacetat hatte ein mittleres Molekulargewicht ($M_n$) von 1900. Seine Dispersität D hatte den Wert 1,7.

Beispiel 8

200 g THF, 5 g Eisessig und 100 g wasserfreie Dodecawolframatokieselsäure wurden in einen Glaskolben mit Rührer und Rückflußkühler in einer Argonatmosphäre und unter starkem Rühren auf 60°C erhitzt. Die Leitfähigkeit der Katalysatorphase wurde während dessen auf 0,9 mS/cm eingestellt. Die Reaktionsmischung wurde wie oben beschrieben aufgearbeitet. Der THF-Umsatz betrug 10 %. Das entstandene Poly-THF-Monoacetat hatte ein mittleres Molekulargewicht von 2800.

Beispiel 9

200 g THF, 10 g Eisessig und 100 g wasserfreie Dodecawolframatokieselsäure wurden in einer Reaktionsapparatur gemäß Figur II in einer Argonatmosphäre und unter starkem Rühren 4 Stunden auf 60°C erhitzt, wobei die elektrische Leitfähigkeit in der Katalysatorphase auf 2,5 mS/cm eingestellt wurde. Die Reaktionsmischung wurde wie beschrieben aufgearbeitet. Der THF-Umsatz betrug 17 %. Das entstandene Poly-THF-Monoacetat hatte ein mittleres Molekulargewicht von 2400.

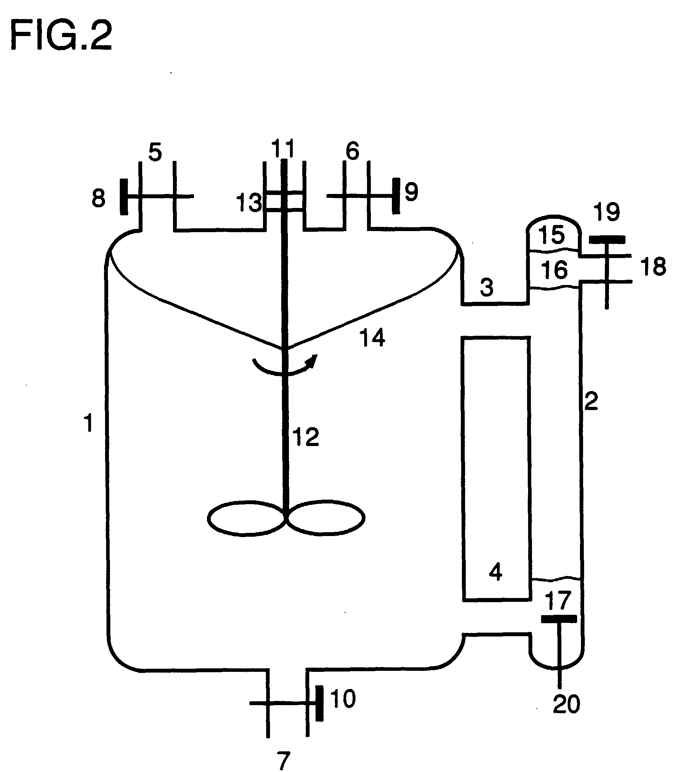

**Patentansprüche**

1. Verfahren zur Herstellung von Polyoxyalkylenglykolen und Polyoxyalkylenglykol-Derivaten eines vor bestimmten mittleren Molekulargewichts durch Heteropolysäure-katalysierte Ringöffnungspolymerisation von cyclischen Ethern und/oder Acetalen in Gegenwart einer konstanten konzentration von Protonen-liefernden Verbindungen, dadurch gekennzeichnet, daß man zunächst für die angewandte Polymerisationstemperatur durch Erstellen einer Eichkurve, einer mathematischen Gleichung oder eines Algorithmus die Korrelationen zwischen der gemessenen

Leitfähigkeit in dem jeweiligen Polymerisationssystem, dem mittleren Molekulargewicht des entstehenden Polymeren sowie dem Gehalt des Polymerisationssystems an Protonliefernder Verbindung ermittelt und so dann während des zeitlichen Verlaufs der Polymerisationsreaktion in diesem Polymerisationssystem und bei der angewandten Polymerisationstemperatur durch kontinuierliche Leitfähigkeitsmessungen die zur Erzielung eines Polymeren bestimmten mittleren Molekulargewichts durch die Korrelationen zuvor ermittelte erforderliche Leitfähigkeit konstant halt, indem man die zur Konstanthaltung der Leitfähigkeit erforderliche Menge an Protonen-liefernder Verbindung zudosiert.

2. Verfahren nach Anspruch 1, dadurch gekennzeichnet, daß man bei der Durchführung der Polymerisationsreaktion im 2-Phasensystem die Konzentration der Protonen-liefernden Verbindung in der flüssigen Katalyatorphase während des zeitlichen Verlaufs der Umsetzung über die Messung der elektrischen Leitfähigkeit der Katalysatorphase reguliert.

3. Verfahren nach Anspruch 2, dadurch gekennzeichnet, daß zur Herstellung von Polyoxyalkylenglykolen die Protonen-liefernde Verbindung Wasser ist.

4. Verfahren nach Anspruch 2, dadurch gekennzeichnet, daß zur Herstellung von Polyoxyalkylenglykol-Monoethern die Protonen-liefernde Verbindung ein einwertiger Alkohol ist.

5. Verfahren nach Anpruch 2, dadurch gekennzeichnet, daß zur Herstellung von Polyoxyalkylenglykol-Monoestern die Protonen-liefernde Verbindung eine Monocarbonsäure ist.

6. Verfahren nach Anspruch 2, dadurch gekennzeichnet, daß es kontinuierlich durchgeführt wird.

## Claims

1. A process for the preparation of polyoxyalkylene glycols and polyoxyalkylene glycol derivatives having a predetermined molecular weight by heteropoly acid-catalyzed ring-opening polymerization of cyclic ethers and/or acetals in the presence of a constant concentration of proton-donating compounds, wherein the correlations between the measured conductivity in the respective polymerization system, the average molecular weight of the resulting polymer and the content of proton-donating compound in the polymerization system are first determined for the polymerization temperature used by setting up a calibration curve, a mathematical equation or an algorithm and then, in the course of the polymerization reaction in this polymerization system and at the polymerization temperature used, the required conductivity determined beforehand by the correlations for achieving a polymer having a certain average molecular weight is kept constant, by means of continuous conductivity measurements, by metering in the amount of proton-donating compound required for keeping the conductivity constant.

2. A process as claimed in claim 1, wherein, when carrying out the polymerization reaction in the 2-phase system, the concentration of the proton-donating compound in the liquid catalyst phase is regulated in the course of the reaction by measuring the electrical conductivity of the catalyst phase.

3. A process as claimed in claim 2, wherein, for the preparation of polyoxyalkylene glycols, the proton-donating compound is water.

4. A process as claimed in claim 2, wherein, for the preparation of polyoxyalkylene glycol monoethers, the proton-donating compound is a monohydric alcohol.

5. A process as claimed in claim 2, wherein, for the preparation of polyoxyalkylene glycol monoesters, the proton-donating compound is a monocarboxylic acid.

6. A process as claimed in claim 2, which is carried out continuously.

## Revendications

1. Procédé de préparation de polyoxyalkylèneglycols et de dérivés de polyoxyalkylèneglycols, d'un poids moléculaire moyen prédéterminé, par la polymérisation à ouverture de cycle, catalysée par des hétéropolyacides, d'acétals

et/ou d'éthers cycliques, en présence d'une concentration constante de composés donneurs de protons, caractérisé en ce que l'on établit d'abord, pour la température de polymérisation utilisée, les corrélations qui existent entre la conductivité mesurée dans le système de polymérisation concerné, le poids moléculaire moyen du polymère qui se forme et la teneur du système de polymérisation en composé donneur de protons, par l'élaboration d'une courbe d'étalonnage, d'une équation mathématique ou d'un algorithme, et on maintient alors constante la conductivité nécessaire, préalablement établie par les corrélations, pour l'obtention d'un polymère de poids moléculaire moyen déterminé, pendant le déroulement dans le temps de la réaction de polymérisation dans ce système de polymérisation et à la température de polymérisation utilisée, par des mesures de conductivité continues, pour autant que l'on ajoute en proportion dosée la quantité de composé donneur de protons nécessaire pour maintenir la conductivité constante.

**2.** Procédé suivant la revendication 1, caractérisé en ce que, lors de l'entreprise de la réaction de polymérisation dans le système à deux phases, on régule la concentration du composé donneur de protons dans la phase catalytique liquide, au cours du déroulement dans le temps de la réaction, par l'intermédiaire de la mesure de la conductivité électrique de la phase catalytique.

**3.** Procédé suivant la revendication 2, caractérisé en ce que pour la préparation de polyoxyalkylèneglycols, le composé donneur de protons est l'eau.

**4.** Procédé suivant la revendication 2, caractérisé en ce que pour la préparation de monoéthers de polyoxyalkylèneglycols, le composé donneur de protons est un alcool monohydroxylé.

**5.** Procédé suivant la revendication 2, caractérisé en ce que pour la préparation de monoesters de polyoxyalkylèneglycols, le composé donneur de protons est un acide monocarboxylique.

**6.** Procédé suivant la revendication 2, caractérisé en ce qu'on l'entreprend en continu.

FIG.1

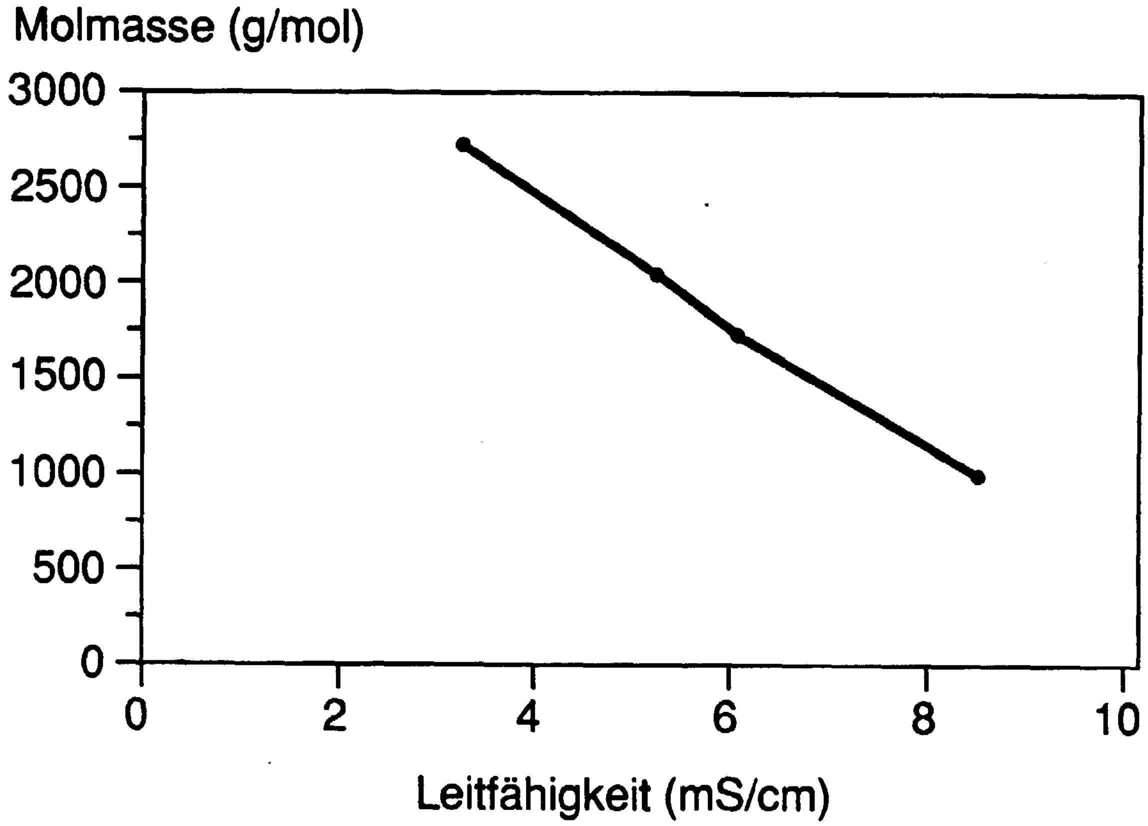
Molmasse (g/mol)
3000
2500
2000
1500
1000
500
0
0
2
4
6
8
10
Leitfähigkeit (mS/cm)

FIG.2